Europäisches Patentamt

European Patent Office

Office européen des brevets

(11) Publication number: **0 352 484**
**A2**

# (12) EUROPEAN PATENT APPLICATION

(21) Application number: **89111573.5**

(22) Date of filing: **24.06.89**

(30) Priority: **29.07.88 DE 3825756**

(43) Date of publication of application:
**31.01.90 Bulletin 90/05**

(84) Designated Contracting States:
**AT BE CH DE ES FR GB GR IT LI NL SE**

(51) Int. Cl.⁴: **H02G 15/113 , H02G 15/10 ,**
**H02G 15/013**

(71) Applicant: **Walter Rose GmbH & Co. KG**
**Lütkenheider Strasse 2**
**D-5800 Hagen 1(DE)**

(72) Inventor: **Papenheim, Friedbert**
**Ernststrasse 7**
**D-5860 Iserlohn 7(DE)**

(74) Representative: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

(54) **Cable coupler.**

(57) A cable coupler with a box-shaped housing (2,3) enclosing the cable entry ends has a non-movable housing part (2) and a housing part (3), which can be opened and closed repeatedly. Seal-forming cable entries are constructed on the end faces of the housing. One part of the seal-forming cable entries (8) is constructed in the non-movable housing part (2), and the cooperating part is constructed in a removable intermediate frame (4). This allows the housing to be re-opened as often as required for subsequent installation work to be performed inside the coupler simply by opening the openable housing part without the seals of the cable entries being destroyed and having to be renewed each time the coupler is opened.

Fig.1

## Cable Coupler

The invention relates to a cable coupler with a box-shaped housing enclosing the cable entry ends. The housing has a non-movable housing half and a housing half which can be opened and closed repeatedly, and has seal-forming cable entries constructed on the end faces of the housing.

A cable coupler of this kind in the form of a box-shaped housing is known, for example, from DE-PS 28 55 387. In this cable coupler, first of all the non-movable housing half is secured to a house wall or similar structure, and then in the open state of the housing cable ends are introduced from either side into the cable entries and these ends, for example in their open end regions, are spliced to one another or branched and so on. It is also possible to introduce the cables in undivided form into the coupler and to guide them through the coupler. When the cable ends have been spliced, the cable entries are sealed using suitable sealing means with respect to the cables that have been introduced, and the outer opening and closing housing half is placed on the non-movable housing half and is closed, so that a completely sealed cable coupler is formed.

If subsequent alterations, for example other combinations of the inserted cables and so on, are to be undertaken after the initial installation of the cable coupler, then the opening housing half has to be opened or removed, with the result that all the two-part cable entries are exposed, that is to say, the seals of all cable entries are destroyed again. Once the subsequent alterations have been carried out inside the coupler, before the coupler is closed again all the seals of the cable entries have to be renewed, which either involves quite considerable effort or is even impossible, as a result of which the cable coupler becomes unserviceable.

From DE-OS 24 21 815 it is known, in particular for tubular cable couplers laid underground, to construct the cable coupler from a separable coupler body with open end faces into which longitudinally divided end plates containing seal-forming cable entries can be inserted. In this case, the cable entries are sealed during the initial installation through corresponding insertion of the cable ends and subsequent sealing as the end plates are put together. If the cable coupler is re-opened after it has been closed, the cable entries in the end plates remain closed and correspondingly sealed. When the cable coupler is opened however, this falls apart into its individual components, that is to say, the actual coupler body and the seperate end plates, or the individual components are held together only by the cables inserted in the coupler and connected to one another. This form of a flexible cable coupler is therefore unsuitable for a cable coupler of the type mentioned in the introduction in the form of a box-shaped housing, since the distinguishing feature of a coupler housing of this kind affixed to a house wall is precisely that, when it is opened, only the movable housing half is to be opened, without the other components of the housing, for example the end faces, being detached.

The aim of the invention is to produce a cable coupler with a box-shaped housing which can be opened up as often as required so that subsequent installation work can be performed inside the coupler simply by opening the openable housing half without the seals of the cable entries being destroyed and having to be renewed each time the coupler is opened.

Thus the present invention provides a cable coupler comprising a box-shaped housing enclosing the cable entry ends, the housing having a non-mcvable housing part and a housing part which can be opened and closed repeatedly, and with seal-forming cable entries constructed on the end faces of the housing, wherein one part, preferably one half of the seal-forming cable entries is constructed in the non-movable housing part and the other cooperating part, preferably cooperating half is constructed in a removable intermediate frame.

Preferably the housing parts are housing halves.

With a cable coupler of this design, the seal at the cable entries is not destroyed when the coupler housing is re-opened simply by opening the openable housing half, but remains permanently intact. The seal is effected after the initial installation of the coupler, that is to say, once all the cable ends have been introduced the intermediate frame is placed correspondingly on the non-moveable housing half and is secured to this, resulting in a permanent seal of the cable entries between the non-movable housing half and the intermediate frame. The opening housing half is subsequently placed on the non-movable housing half and the intermediate frame and correspondingly closed. When the coupler is re-opened, only the opening housing half is opened, the intermediate frame with the sealed cable entries on the other hand remains on the non-movable housing half so that the cable entries are not opened and thus the seals are not destroyed. The entire interior of the coupler is, however, freely accessible for work to be carried out inside the coupler.

To guarantee a complete seal of the closed coupler, provision is made for the intermediate frame to be sealed with respect to the non-movable housing half, and correspondingly with respect to the opening housing half, in the region of a circumfrential frame-shaped contact area. A simple commercially available seal of this kind is not destroyed when the coupler is opened and can simply be repositioned when the coupler is closed again.

In an advantageous development of the invention, provision is made for the intermediate frame to be rigidly connectable by means of releasable fastening means to the non-movable housing half. This development enables the intermediate frame to be detached in certain cases, so that the cable entries can be exposed, whenever, for example, a cable end is to be installed or removed. The seal at the cable entries is then destroyed, however, and has to be renewed.

An especially preferred embodiment of the invention comprises a cable clamp associated externally with each cable entry, the clamp being capable of absorbing forces which may be exerted on the cables. By means of this cable clamp on the outside of the coupler at each cable entry a considerable improvement is achieved compared with known cable clamps inside the coupler, since all forces exerted outside the coupler on the cables are absorbed by these cable clamps outside the actual coupler, with the result that no stress is put on the cable entries and thus no damage is able to occur to the seals of the cable entries.

It is particularly advantageous for each cable entry to have outwardly directed supports with internal guides into which clamping members of graduated diameter can be inserted. In this case, as the cable ends are inserted the clamping members are inserted into the preferably symmetrically arranged supports, the clamping members being fixed by the internal guides. The clamping members have graduated diameters matched to the different cable diameters.

In a preferred development, provision is made for the internal surfaces of the clamping members to be of oblique construction with rupture joints arranged step-wise. Because of the oblique internal surfaces it is possible for the cable ends to be clamped, and therafore fixed, especially effectively. Portions of the clamping members matched to the particular cable diameter can simply be broken off, so that a one-piece clamping member with rupture joints is suitable for different diameters of cable.

The ease with which these clamping members can be manipulated is considerably improved if the individual clamping members are joined together by slotted spring rings. The clamping pieces can then be inserted jointly into the internal guides of the supports of the cable entries.

To ensure a complete and especially reliable fixing of the cable ends in the cable clamps, provision is made for a clamping ring to be attached to the free ends of the supports. By clamping the free ends using the clamping ring, it is virtually impossible for the cable ends to split out.

It is particularly advantageous for the free ends of the supports to be provided with apertures corresponding to the thickness of the clamping ring. The clamping ring can then be inserted and accurately fixed in these apertures.

According to an especially preferred development of the invention, provision is made for a semicylindrical sealing chamber for a plastic sealing compound to be constructed in each half of a particular cable entry. This sealing chamber considerably simplifies handling of the cable coupler during assembly since laborious insertion of sealing compounds, for example by wrapping round the cable ends and so on, is unnecessary.

The seal is yet further improved if semi-annular grooves to match the various cable diameters are formed in the outer end face and/or the inner face of the semi-cylindrical sealing chamber. These grooves form a lateral closure of the sealing chambers which ensure that the sealing compound is unable to escape from the sealing chamber. These grooves are then to be cut out corresponding to the particular cable diameters.

Provision may also be made for a slot to be formed in the inner end face of the semi-cylindrical sealing chamber. This formation of the inner wall of the sealing chamber is simpler as it is not then necessary to cut out grooves for the insertion of the cable end, but at the same time this slot guarantees that no sealing compound is able to escape from the sealing chamber into the interior of the coupler.

The ease with which the coupler can be manipulated during the opening is considerably simplified if the opening housing part is pivotable by means of hinges arranged on one side. It is, of course also possible completely to remove the opening housing part for opening of the coupler.

According to a preferred embodiment of the invention, provision is made for the hinges to be arranged on the top side of the coupler and to be provided with a locking means holding them in the open position. If the coupler has to be opened, for example in bad weather, i.e. in rain, then folding the opening housing part upwards affords the opened coupler protection against damp. An automatic open position is achieved through the locking means, so that the housing part does not have to held up.

Finally, provision is also made for an upper marginal strip of the opening housing part facing the hinges to be of bevelled construction. This bevelled construction of the marginal strip prevents moisture which may have collected on the upper side of the coupler from getting into the interior of the coupler as this is opened; on the contrary, this moisture runs away over the bevelled edge on the outside of the coupler.

Embodiments of the invention are now described by way of example only, with reference to the accompanying drawings, in which

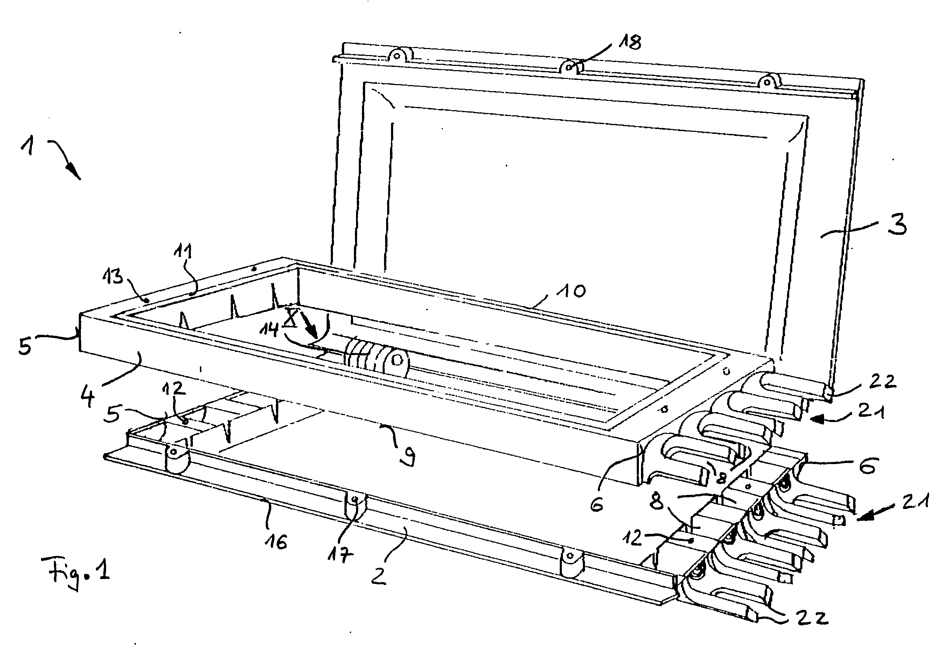

Fig. 1 shows an exploded view of a box-shaped cable coupler according to the invention;

Fig. 2 shows a plan view of a non-movable housing half of the cable coupler shown in Fig. 1;

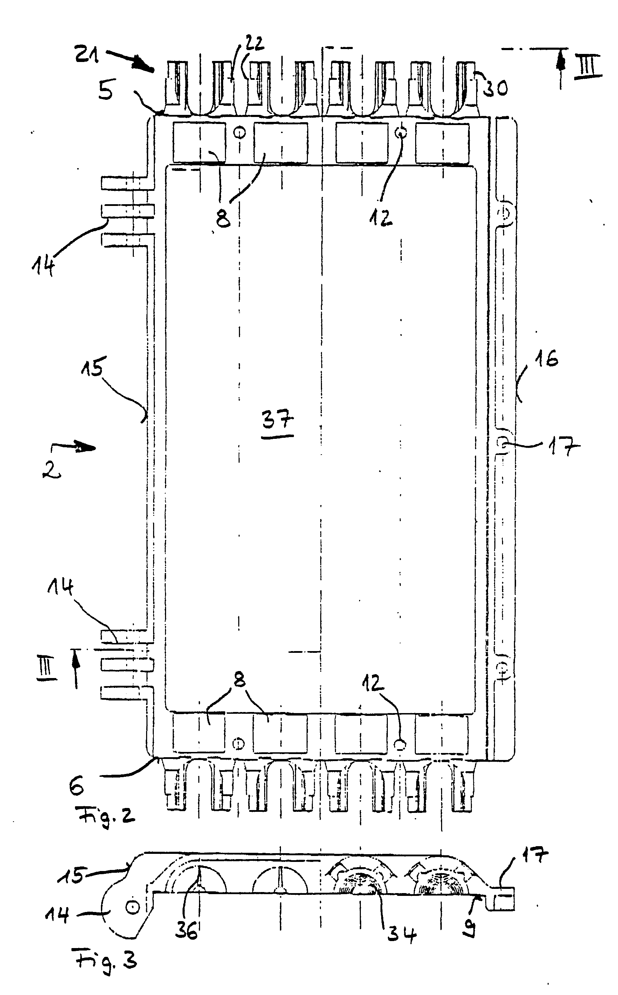

Fig. 3 shows a half section along the line III-III in Fig. 2;

Fig. 4 shows a plan view of an intermediate frame of the cable coupler of Fig. 1;

Fig. 5 shows a half section along the line V-V in Fig. 4;

Fig. 6 shows a half section along the line VI-VI in Fig. 4;

Fig. 7 shows a plan view of an opening housing half of the cable coupler of Fig. 1;

Fig. 8 shows a section along the line VIII-VIII in Fig. 7;

Fig. 9 is an exploded view of an enlarged scale of a semi-cylindrical sealing chamber with cable clamp; and

Fig.10 is an enlarged detail from Fig. 1 following arrow X.

Referring to the drawings, a cable coupler denoted generally by the reference number 1 is in the form of a box-shaped housing, and comprises a non-movable housing half 2, a housing half 3 which can be opened and closed and serves as a lid, and a removable intermediate frame 4. In the ends 5, 6 of the non-movable housing half 2 and of the intermediate frame 4 there are formed cable entries 8, in each case of semi-cylindrical construction, which are arranged side by side by putting together the intermediate frame 4 and the non-movable housing half 2, closed cable entries are formed.

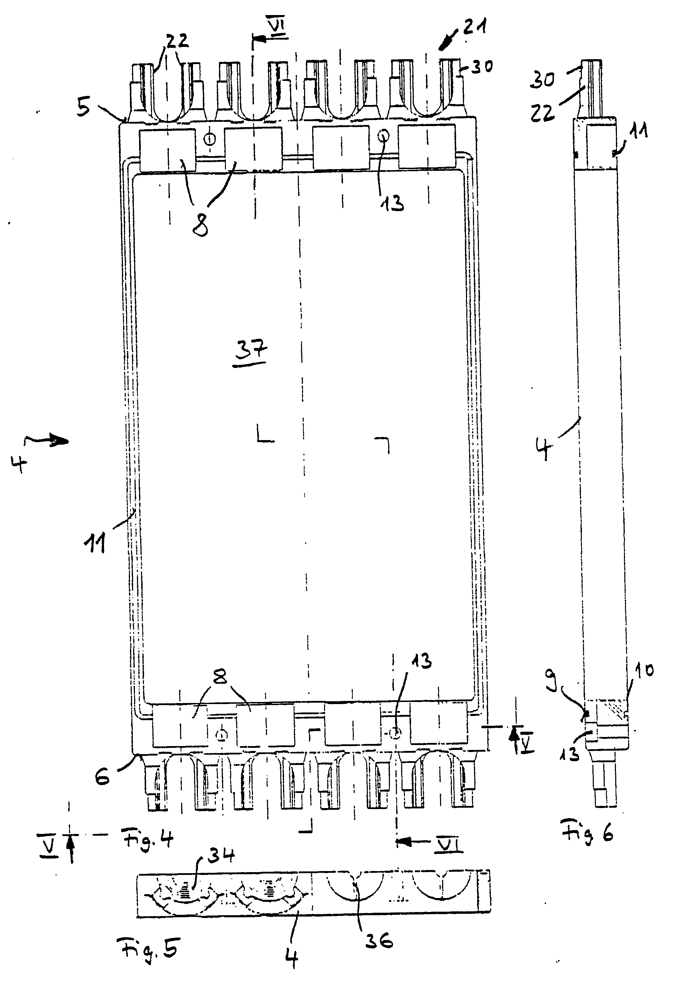

On circumfrential frame-shaped contact faces 9, 10 of the intermediate frame 4 opposite the non-movable housing half 2 and the opening housing half 3 there are provided frame seals (not shown in the drawing). By way of example, as shown in Figs 4 and 6 of the drawings, an additional circumfrential groove 11 into which a frame seal can be inserted is shown in the contact face 10. A similar groove may, of course, also be provided in the contact face 9.

The intermediate frame 4 can be rigidly connected by means of releasable fixing elements to the non-movable housing half 2. These fixing elements are indicated by threaded bores 12 in the non-movable housing half 2 and by bores 13 in the intermediate frame 4 into which corresponding fixing screws (not shown in detail in the drawing) can be screwed.

The opening housing half 3 is pivotally connected to the non-movable housing half 2 by means of hinges 14 ghich are preferably arranged on the top side 15 of the coupler. In the underside 16 of the coupler opposite the hinges 14, in the non-movable housing half 2 there are provided threaded bores 17, and in the opening housing half 3 there are provided corresponding bores 18 into which fixing screws (not illustrated) can be screwed to close the cable coupler. The hinges 14 are preferably equipped with locking means in the form of catches or similar constructions, which are not shown in detail in the drawing, so that when the opening housing half 3 is folded up this remains automatically in a specific open position. Alternatively, instead of the hinges 14, screw connections could, of course, be provided on the upper side 15 of the coupler and on the underside 16 of the coupler. The construction including the hinges is especially easy to manipulate.

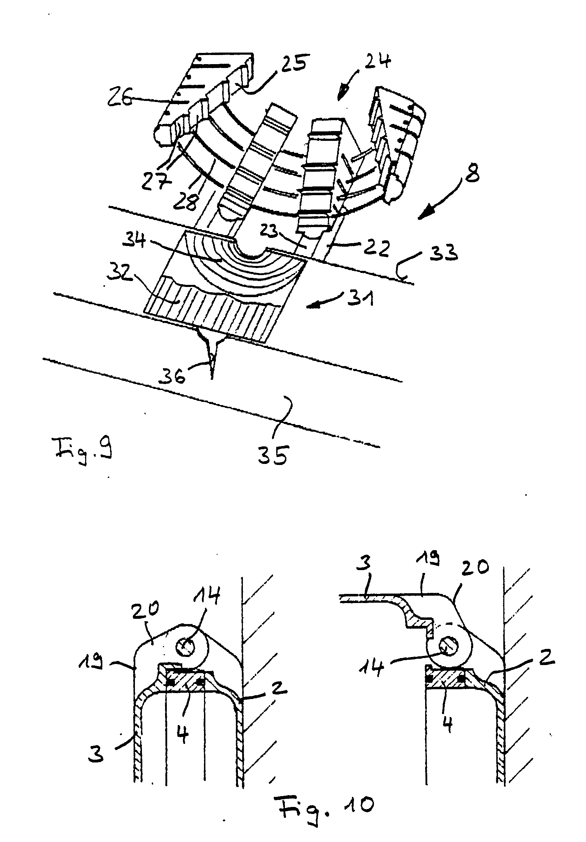

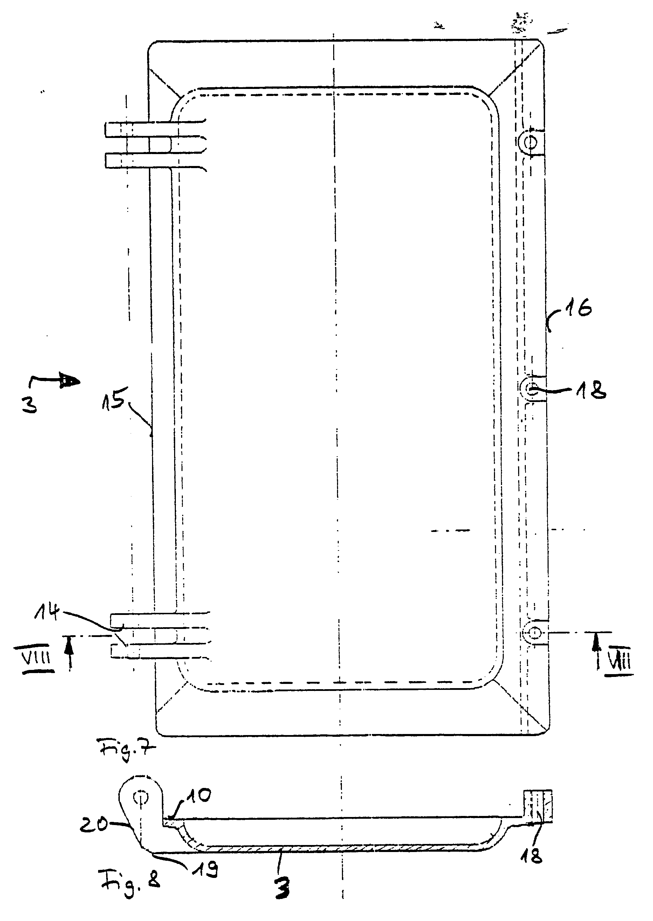

As especially apparent from Fig. 10, in the region of the hinge 14 an upper marginal strip 19 of the opening housing half 3 is provided preferably with a bevel 20, which is pivoted over the corresponding region of the non-movable housing half 2 when the housing half 3 is opened up. This means that any liquid, for example rainwater, which has collected on the upper side of the coupler 15 flows off and does not get into the inside of the coupler.

The cable entreis 8 are constructed in two parts correspondingly symmetrically in the non-movable housing half 2 and in the intermediate frame 4. A cable clamp 21 is associated with each entry cable 8 on the outside. This cable clamp 21, to be described in detail below, is suitable not only for the above-described cable coupler with its intermediate frame, 4 but also for conventional cable couplers with two-part housing halves and cable entries constructed in each housing half.

The cable clamp 21 consists of outwardly directed supports 22 with internal guides 23 into which clamping members 24 can be inserted, as especially apparent from Fig. 9. The internal guides 23 are inclined so that clamping members 24 of graduated diameter can be inserted to clamp different thicknesses of cable. The internal faces 25 of the clamping members 24 are also of oblique construction to ensure an especially good clamping of the cable ends to be inserted.

As shown in Fig. 9, each clamping member 24 is preferably divided into several regions 27 of graduated diameter separated from one another by rupture joints. Depending on the diameter of the cable end to be inserted, corresponding regions 27 can then be broken off at the rupture joints in order to achieve a correspondingly matched clamping of the cable by the clamping members 24.

The number of clamping members 24 corresponds to the number of supports 22, the arrangement preferably being selected to be symmetrical. In this embodiment four supports 22 and four clamping members 24 are provided for each cable entry 8. The individual clamping members 24 are preferably joined to one another by slotted spring rings 28, the corresponding regions 27 of graduated diameter in each case being joined by means of their own spring ring 28. Insertion of the clamping members 24 is facilitated by this join and the clamping members are automatically located in the position corresponding to the inner guides 23 of the supports 22.

At the free ends 29 of the supports 22 there are provided apertures 30 for a clamping ring (not illustrated) which is provided for clamping the cable clamps 21 once the cable ends have been inserted.

As also apparent from the drawings, especially Fig. 9, each two-part cable entry 8 in the non-movable housing half 2 and in the intermediate frame 4 has a semi-cylindrical sealing chamber 31 for a plastic sealing compound 32. The sealing chamber 31 is limited at its outer end face 33 by semi-annular grooves 34 which can be cut out corresponding to the particular cable diameter. On the inner end face 35 of each sealing chamber 31 there is a wall with a slot 36 which allows the cable to be guided through but prevents escape of the sealing compound 32 into the interior of the coupler. Alternatively, semi-annular cut-away grooves 34 could, of course, be provided on the inner end face 35 of the sealing chamber 31.

For the initial assembly of the cable coupler 1, that is to say, for the insertion of cable ends (not illustrated) through the cable entries 8 into the coupler, first of all the non-movable housing half 2 is secured with the top side 15 of the coupler uppermost to a house wall or similar substrate. Once the opening housing half 3 has been swung upwards, the intermediate frame 4 is removed by releasing the fixing means 12, 13. For the insertion of cable ends into the cable entries 8, corresponding to the particular cable diameter the semi-cylindrical sealing chambers 31 in the non-movable housing half 2 and the intermediate frame 4 are prepared by cutting away the semi-annular grooves 34. At the same time the cable clamps 21 are matched to the particular cable diameter by cutting away areas 27 of the clamping members 24 at the rupture joints 26. After being guided through the cable clamps 21 and inserted into the supports 22, the cable ends are then positioned in the sealing chambers 31 in such a way that their free ends penetrate sufficiently far into the interior of the coupler denoted by reference 37.

Once all the cable ends have been positioned, the intermediate frame 4 is placed on the non-movable housing half 2 after insertion of a suitable seal, and is rigidly joined to the non-movable housing half 2 by means of the releasable fixing means 12, 13. A suitable frame seal is then placed in the circumferential groove 11 to form a seal with respect to the opening housing half 3. The cable ends are then suitably connected or spliced to the another in the interior 37 of the coupler which remains freely accessible even after the intermediate frame 4 has been put into position. Following this installation, the opening housing half 3 can be closed and joined in a water-tight manner to a non-movable housing half 2 by means of fixing elements 17,18.

If the coupler wiring, that is to say, the connection of the cable ends inside the coupler, needs subsequent alteration, then once the fixing elements 17, 18 have been released the opening housing half 3 can be pivoted up without the seals of the cable entries 8 being damaged thereby. The design of the opening housing half 3 in the region of its upper marginal strip 19 ensures that rain water which may have collected on the coupler assembled in the open does not get into the interior 37 of the coupler as it is opened, but flows away over the bevel 20 on the outside of the coupler. At the same time, the opened housing half 3 affords protection from rainwater if the coupler has to be opened while it is raining.

The coupler is readily accessible for installation after the opening housing half 3 has been opened, so that the cable ends located in the interior 37 of the coupler can be re-connected to one another and so on. Subsequently, the outer housing half 3 merely needs to be closed again by pivoting it about the hinges 14, without the cable entries 8 having to be re-sealed.

The invention is not, of course, restricted to the embodiment illustrated in the drawing; other embodiments of the invention are possible without departing from the basic concept. Thus, the design of the cable clamps 21 and the sealing chambers 31 in particular is not restricted to the cable coupler illustrated in the drawing. On the contrary, this construction is also suitable for known box-shaped cable couplers without intermediate frames, in which the cable entries are formed by the non-movable and the opening housing halves.

**Claims**

1. A cable coupler comprising a box-shaped housing (2,3) enclosing the cable entry ends, the housing having a non-movable housing part (2) and a housing part (3) which can be opened and closed repeatedly, and with seal-forming cable entries (8) constructed on the end faces of the housing, wherein one part, preferably one half of the seal-forming cable entries (8) is constructed in the non-movable housing part (2) and the other cooperating part, preferably cooperating half is constructed in a removable intermediate frame (4).

2. A cable coupler according to claim 1, wherein the intermediate frame (4) is sealed with respect to the non-movable housing part (2), and correspondingly with respect to the opening housing part (3), in the region of each of circumfrential frame-shaped contact areas (9,10).

3. A cable coupler according to claim 1 or 2, wherein the intermediate frame (4) is rigidly connectable by means of releasable fastening means (12,13) to the non-movable housing part (2).

4. A cable coupler according to any preceding claim, comprising a cable clamp (21) associated externally with each cable entry (8), the clamp being capable of absorbing forces which may be exerted on the cables.

5. A cable coupler according to claim 4, wherein each cable entry (8) has outwardly directed supports (22) with internal guides (23) into which clamping members (24) of graduated diameter can be inserted to exert a clamping action.

6. A cable coupler according to claim 4 or 5, wherein the internal surfaces (25) of the clamping members (24) are of oblique construction with rupture joints (26) arranged step-wise.

7. A cable coupler according to claim, 4, 5 or 6, wherein the individual clamping members (24) are joined together by slotted spring rings (28).

8. A cable coupler according to any of claims 4 to 7, comprising a clamping ring which can be positioned at the free ends (29) of the supports (22).

9. A cable coupler according to claim 8 wherein, the free ends (29) of the supports (22) are provided with aperutres (30) corresponding to the thickness of the clamping ring.

10. A cable coupler according to any preceding claim, comprising a semi-cylindrical sealing chamber (31) for a plastic sealing compound constructed in each part of a particular cable entry (8).

11. A cable coupler according to claim 10, comprising semi-annular grooves (34) to match the various cable diameters, which grooves are formed in the outer end face (33) and/or the inner end face (35) of the semi-cylindrical sealing chamber (31).

12. A cable coupler according to claim 10 or 11, comprising a slot (36) formed in the inner end face (35) of the semi-cylindrical sealing chamber (31).

13. A cable coupler according to any preceding claim, wherein the opening housing half (3) can be pivoted by means of hinges (14) arranged on one side.

14. A cable coupler according to claim 13, wherein the hinges (14) are arranged on the top side (15) of the coupler (1) and are provided with a locking means holding them in the open position.

15. A cable coupler according to claim 13 or 14, wherein an upper marginal strip (19) of the opening housing part (3) facing the hinges (14) is of bevelled construction.

Fig. 1

EP 0 352 484 A2

Fig. 2

Fig. 3

Fig. 4

Fig. 5

Fig. 6

EP 0 352 484 A2

Fig. 9

Fig. 10

Fig.7

Fig. 8